(19) Europäisches Patentamt
European Patent Office
Office européen des brevets

(11) EP 2 848 900 A1

(12) EUROPEAN PATENT APPLICATION

(43) Date of publication:
18.03.2015 Bulletin 2015/12

(51) Int Cl.:
$G01F\ 1/50$ (2006.01)

(21) Application number: 13184603.2

(22) Date of filing: 16.09.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Siemens Aktiengesellschaft
80333 München (DE)

(72) Inventor: Geitung, Tore
5437 Finnås (NO)

(54) **Differential-pressure flowmeter and method of determining a flow rate**

(57) A method of determining a flow rate of a medium flowing through a section of a pipe by means of a flow meter is provided. In the method, at least a differential pressure is measured across a flow restriction in the section of the pipe. A correction factor is determined. The correction factor is determined in dependence on the measured differential pressure and on the configuration of the flow meter. The flow rate of the medium is determined on the basis of the measured differential pressure and the determined correction factor.

FIG 1

EP 2 848 900 A1

**Description**

Field of the invention

The present invention relates to a method of determining a flow rate of a medium flowing through a section of pipe and to a flow meter. The invention further relates to a method of configuring such flow meter.

Background

Flow meters find application in several different technical fields. The measurement of flow is particularly important in the oil and gas production, for example for determining the quantity of hydrocarbons extracted from a reservoir or well. Also, when injecting a medium into a well, such as during enhanced oil recovery, the measurement of flow is of importance. A particular challenge is the measurement of flow in a subsea environment, in which pressures in excess of hundred or even thousand bar can prevail.

A subsea production system can for example comprise a single well or plural satellite wells, which can be connected to each other via flow lines. Furthermore, such flow lines are generally provided for transporting produced hydrocarbons to a floating vessel, such as a floating production storage and offloading vessel (FPSO), to an offshore platform, or, via a pipeline, to an onshore site. To ensure a reliable operation of such subsea production system, flow measurements are required at several locations, for example at the well heads, at joints of the pipes and the like.

It is desirable to provide flow measurements with high precision. Often, flow meters suffer from the drawback that the measurements cannot be provided with the same precision over the whole range of measurable flow rates (i.e. from almost no flow to maximum flow). Generally, deviations from low flow rates to high flow rates within a certain percentage are accepted. Flow meters are often optimized for a particular operating range, wherein at the limits of this range or outside of the range, the deviations of the measured flow rate from the real flow rate increase significantly.

Summary

Accordingly, there is a need to improve the accuracy of flow rate measurements by flow meters.

This need is met by the features of the independent claims. The dependent claims describe embodiments of the invention.

According to an embodiment of the invention, a method of determining a flow rate of a medium flowing through a section of pipe by means of a flow meter is provided. The method comprises the steps of measuring at least a differential pressure across a flow restriction in the section of pipe by means of the flow meter, and of determining a correction factor. The correction factor is determined in dependence on the measured differential pressure and the configuration of the flow meter. Furthermore, the method comprises determining the flow rate of the medium through the section of pipe on the basis of the measured differential pressure and the determined correction factor.

Accordingly, since the correction factor is dependent on the measured differential pressure, it is allowed to change over the operating range of the flow meter. Thus, at a high differential pressure, the correction factor may be different from the correction factor at a lower differential pressure. Furthermore, the correction factor is dependent on the configuration of the flow meter, i.e. on the particular flow meter that is used in the flow rate measurements. Consequently, any particular configuration of the flow meter can be considered in the determination of the correction factor. The determination of the flow rate may thus be performed with a significantly improved accuracy.

In an embodiment, determining the correction factor may comprise providing, for the particular flow meter, a function which relates the correction factor to differential pressure. The function may be applied to the measured differential pressure in order to determine the correction factor. By using such function, a correction factor which enables a precise determination of flow rate can be provided for a large range of measured differential pressures. Furthermore, since the function is provided for the particular flow meter, any specific configuration of the flow meter can be considered when determining the correction factor. The flow rate of the medium through the section of pipe may thus be determined with improved accuracy. The function may be a mathematical function.

The function may be a polynomial, and providing the function may comprise providing constants of the polynomial. Such constants are for example the coefficients of the different polynomial terms.

The polynomial may for example be a polynomial of at least third order. By such type of function, the dependency of the correction factor on differential pressure can be described accurately, so that even at the limits of the operating range of the flow meter, the flow rate can be determined with relatively high precision.

In an embodiment, the function is a function determined from plural flow rate calibration measurements using said flow meter. By performing such calibration measurements with the same flow meter with which the function is later used for flow rate determination, high accuracy determination of a flow rate becomes possible. Furthermore, by means of such flow rate calibration measurements, a precise relationship between the correction factor and the measured differential pressure may be derived.

The function may for example be a function that is obtained by curve-fitting a template function, such as the above mentioned polynomial function, to the plural flow rate calibration measurements. Accordingly, the polynomial function may be chosen such that when using the data of the flow rate calibration measurements, the function produces a correction factor which, from the measured differential pressure, reproduces the predetermined flow rate used in the calibration measurements, i.e. the function may be chosen such that the error between the predetermined flow rate and the flow rate determined by using the correction factor is minimized.

As an example, the flow rate calibration measurement may be performed by measuring differential pressure for different predetermined flow rates and determining a correction factor for each pair of predetermined flow rate and measured differential pressure (since in the calibration measurement, the flow rate is already known, the correction factor can be the only unknown variable and can thus be determined precisely). Determining the above mentioned function may then comprise providing the resulting pairs of determined correction factor and measured differential pressure for the determination of the function. As an example, to these value pairs, the function may be fitted by means of curve-fitting. For example, a polynomial function which expresses a relationship between correction factor and differential pressure may be fitted to these value pairs. On one hand, the constants of the function, in particular of the polynomial, can thus be determined in an efficient way, while on the other hand, the so determined function can quite precisely reflect the relationship between correction coefficient and differential pressure.

Determining the correction factor may for example comprise retrieving the constants of the function from a memory, and applying the function to the measured differential pressure so as to determine the correction factor for the measured differential pressure.

According to a further embodiment of the invention, a flow meter for measuring a flow rate of a medium flowing through a section of pipe is provided. The flow meter comprises a differential pressure sensor configured to measure differential pressure across a flow restriction in the section of pipe. It further comprises a processing unit adapted to determine a correction factor in dependence on the measured differential pressure and the configuration of the flow meter. The processing unit is further adapted to determine the flow rate of the medium through the section of pipe on the basis of the measured differential pressure and the determined correction factor.

By means of such flow meter, advantages similar to the ones outlined further above with respect to embodiments of the method may be achieved. In particular, by making use of such processing unit, the accuracy of the determination of the flow rate of the medium may be improved.

In an embodiment, the flow meter may comprise the above mentioned section of pipe and the flow restriction. Accordingly, the configuration of the flow meter may comprise the configuration of the flow restriction, which may thus be considered by means of the correction factor when determining the flow rate. Consequently, flow rate determination may be possible with an even higher accuracy.

In an embodiment, the processing unit may comprise a data interface. The processing unit can be configured to provide a data signal indicative of the determined flow rate at the data interface. Accordingly, it may be possible to read out the flow rate via the data interface. This may facilitate flow rate determination.

Note that in some embodiments, the processing unit may be integrated within a same physical unit as a differential pressure sensor of the flow meter, i.e. processing unit may be arranged adjacent to measuring equipment for measuring differential pressure across the flow restriction. In other embodiments, the processing unit may be located remote from a differential pressure sensor used for measuring the differential pressure across the flow restriction, and data communication may be used for providing the measured differential pressure from the differential pressure sensor to the processing unit.

In an embodiment, the flow meter may be a subsea flow meter comprising a housing mountable to the section of pipe. In some embodiments, the processing unit is arranged within the housing. In other embodiments, the processing unit may be arranged remote from the housing, and a differential pressure sensor of the flow meter for measuring the above mentioned differential pressure may be arranged within the housing.

In some embodiments, such differential pressure sensor and the processing unit may be arranged within such housing. In other embodiments, separate housings may be provided for the processing unit and for the differential pressure sensor.

In embodiments, in which the processing unit is arranged remote from the section of pipe and from the differential pressure sensor, the processing unit may for example be arranged within a subsea electronic module, or at a topside installation, such as onboard a floating vessel, an offshore platform, at an onshore site or the like.

The housing may for example be a pressure compensated (i.e. the internal pressure is pressure balanced against the pressure prevailing in the surrounding medium, in particular the sea water, when installed subsea) or a pressure resistant subsea enclosure (which maintains e.g. a close to atmospheric pressure inside).

Providing both the differential pressure sensor and the processing unit in the housing has the advantage that the flow meter can be provided as a compact unit and can deliver accurate readings of flow rate.

The flow meter may further comprise a connector disposed on the housing and a data connection between the processing unit and the connector. Accordingly, by means of the connector, an electrical or optical conductor can be connected to the flow meter disposed subsea, so as to enable a data communication from a topside installation with the flow meter. The data connection may be an electrical or an optical data connection. By means of such data connection and connector, a data interface to the processing unit may be provided for communicating the determined flow rate. In particular, the data connection and the connector can provide the above mentioned data interface. The connector may for example be a wet-mate connector, that can be mated subsea, or a dry-mate connector (which is mated above the surface of the sea).

In an embodiment, the housing is adapted to enable an operation of the flow meter at a water depth of at least 100 m, preferably at least 500 m, or, more preferably, at least 1.000 m. Accordingly, even at subsea wells which are located in large water depths, accurate readings of a flow rate become possible.

In an embodiment, the processing unit comprises a data memory, and the data memory may store configuration data for the flow meter. The configuration data may at least comprise constants of a function relating the correction factor to measured differential pressure, wherein the constants are specifically determined for the flow meter. These constants may for example be the above mentioned constants of a polynomial which relates the correction factor to differential pressure measurements.

According to a further embodiment of the invention, a method of configuring a flow meter is provided. The flow meter can be configured in accordance with any of the above described embodiments. The method comprises measuring differential pressure for plural predetermined flow rates by the flow meter in a calibration measurement, determining a correction factor for each of the measured differential pressures by using the respective measured differential pressure and the predetermined flow rate, and determining a function which describes a relationship between the determined correction factors and the respective measured differential pressure. The function is determined by adjusting constants of the function such that the function approximates the relationship, i.e. such that the function approximates the value pairs of determined correction factor and measured differential pressure of the calibration measurements. The method further comprises providing the constants of the function to a processing unit of the flow meter for the determination of a correction factor from measured differential pressure by the flow meter.

Accordingly, by configuring the flow meter in such way, the flow meter is capable of providing accurate flow rate measurements by measuring differential pressure. The accuracy can be maintained over a wide operational range of differential pressures and thus flow rates.

It is to be understood that the features mentioned above and those yet to be explained below can be used not only in the respective combinations indicated, but also in other combinations or in isolation without leaving the scope of the present invention. In particular, the flow meter may be configured so as to perform any of the method steps described with respect to the method of determining a flow rate. Similarly, the method of determining a flow rate may make use of the flow meter in any of the described embodiments and configurations.

Brief description of the drawings

The foregoing and other features and advantages of the invention will become further apparent from the following detailed description read in conjunction with the accompanying drawings. In the drawings, like reference numerals refer to like elements.

Figure 1 is a schematic drawing showing a flow meter according to an embodiment of the invention.

Figure 2 is a flow diagram illustrating a method according to an embodiment of the invention.

Figure 3 is a flow diagram illustrating a method according to an embodiment of the invention.

Figure 4 is a schematic diagram showing a function fitted to value pairs of correction factor and differential pressure.

Figure 5 is a table showing calibration measurements at predetermined flow rates.

Figure 6 is a table showing correction factors Cf determined from calibration measurements for different predetermined flow rates.

Figure 7 is a table showing correction factors determined from a polynomial function and showing a comparison between predetermined flow rate and flow rate determined by using the derived correction factors.

Detailed description

In the following, embodiments of the invention will be described in detail with reference to the accompanying drawings. It is to be understood that the following description of the embodiments is given only for the purpose of illustration and is not to be taken in a limiting sense. The drawings are to be regarded as being schematic representations only, and elements in the drawings are not necessarily to scale with each other. Rather, the representation of the various elements is chosen such that their function and general purpose become apparent to a person skilled in the art.

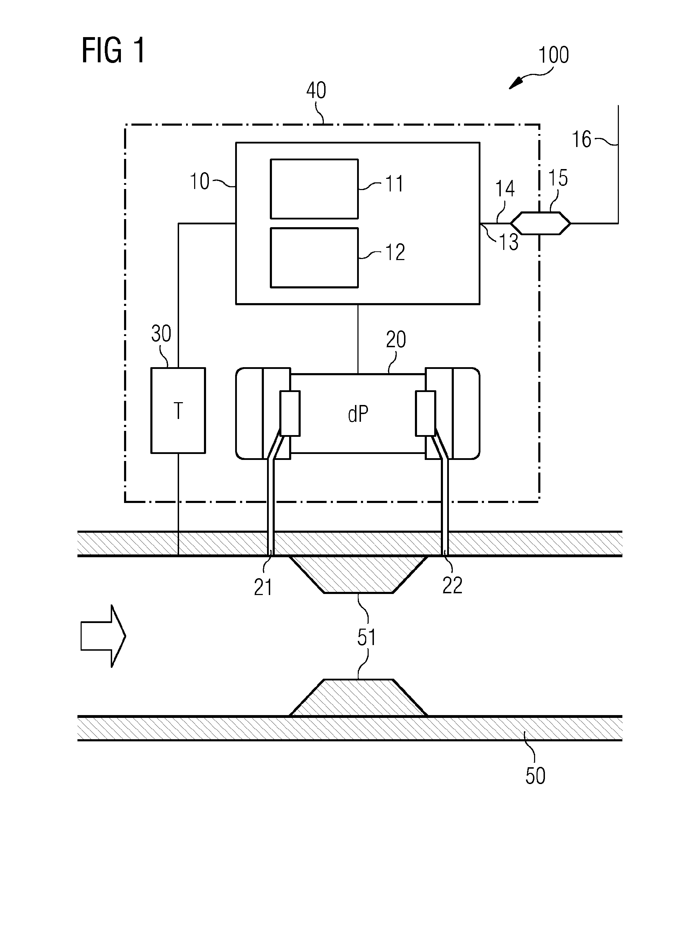

Figure 1 is a schematic drawing showing a flow meter 100 according to an embodiment of the invention. The flow meter 100 is based on differential pressure measurements. For this purpose, it comprises a differential pressure sensor 20 which measures differential pressure across a flow restriction 51 provided in a section of pipe 50. This section of pipe 50 may for example be mounted in a subsea production system, and a fluid produced from a subsea well, or a fluid to be injected into a subsea well may flow through the section of pipe 50 in operation. The flow restriction 51 will cause a pressure difference between the pressure prevailing before the flow restriction and after the flow restriction. This pressure difference depends on the velocity of the fluid flowing through the section of pipe 50, and accordingly on the flow rate.

In order to measure differential pressure, differential pressure sensor 20 comprises a first pressure inlet 21 arranged before the flow restriction 51 and a second pressure inlet 22 arranged behind the flow restriction 51. By means of these pressure inlets 21, 22, the differential pressure (dP) sensor 20 can pick up the differential pressure across the flow restriction 51.

Furthermore, a flow rate measurement may be influenced by the temperature of the flowing medium, i.e. of the fluid flowing through pipe section 50. Flow meter 100 may thus optionally comprise the temperature sensor 30 which picks up the temperature of the fluid within pipe section 50. By making use of additional temperature readings, the determination of the flow rate of the fluid through section of pipe 50 can be improved.

For determining the flow rate of the medium, e.g. a fluid, in particular a liquid, which is flowing through the section of pipe 50, the flow meter 100 comprises a processing unit 10. The processing unit 10 obtains measurements of differential pressure by means of differential pressure sensor 20 and measurements of temperature by means of temperature sensor 30. Furthermore, the processing unit 10 is adapted to determine a correction factor which is used in the determination of flow rate. The processing unit 10 determines the correction factor in dependence on the differential pressure measured by DP sensor 20 and on the configuration of the flow meter 100. This way, it becomes possible to determine a correction factor Cf using which an accurate determination of the flow rate can be achieved. In particular, deviations from the flow rate determination at particularly low flow rates or at particularly high flow rates can be reduced, thereby improving the accuracy of flow rate determination over the whole operating range.

Using the measured differential pressure and the determined correction factor, processing unit 10 determines the flow rate of the flow of medium through the section of pipe 50.

Processing unit 10 comprises a data memory 11 and a processor 12, e.g. micro processor. Data memory 11, which may for example be a volatile or non-volatile memory, such as a flash memory, a random access memory, an EPROM or EEPROM memory, or the like, stores a function which relates the correction factor to differential pressure. Accordingly, by applying this function to a measured differential pressure, a correction factor can be derived. The function may for example be a polynomial function. Accordingly, storing the function in data memory 11 may be performed by storing constants of such polynomial function (i.e. the coefficients of the polynomial terms) in the data memory 11.

The polynomial function may for example be a third order or even higher order polynomial function. A third order polynomial function has four constants, and these four constants may be stored in data memory 11. The function stored in data memory 11 is specific to the particular flow meter 100. It may for example be obtained by means of calibration measurements performed using flow meter 100, as described further below.

In the embodiment of figure 1, the flow meter 100 is a subsea flow meter which comprises a housing 40, which may be a pressure compensated or pressure resistant subsea enclosure. In some embodiments, the processing unit 10 may be comprised within the housing 40 of the flow meter 100. In particular, the processing unit 10 may be provided subsea in a subsea enclosure located in proximity to the section of pipe 50. The differential pressure (dP) sensor 20 and the processing unit 10 may be comprised within the same housing 40, yet in other configurations, separate housings may be provided for processing unit 10 and dP sensor 20.

The housing 40 of processing unit 10 may be provided with a connector 15, which may for example be a subsea wet-mate or dry-mate connector. Furthermore, the processing unit 10 comprises a data interface 13 for communicating the determined flow rate for further processing. The data interface 13 may for example be provided by a data connection 14 and the connector 15. A data communication line 16 may be connected to the connector 15 for communicating the determined flow rate to e.g. a topside installation such as a floating vessel or an offshore platform, or to an onshore site. In such configuration, the flow rate may be directly read from flow meter 100 via the data communication line 16 and the data interface 13 of flow meter 100. Such configuration facilitates the determination of flow rate by means of flow meter 100, since the flow rate can be directly read from the flow meter 100, without the need to further process the data.

Furthermore, since the flow rate is determined by making use of the correction factor which is specific to the flow meter 100 and which is determined for the particular measured differential pressure, the flow rate that can be read from flow meter 100 has improved accuracy over the whole operating range.

In other embodiments, the processing unit 10 may be provided remote from measuring equipment, such as the differential pressure sensor 20, of the flow meter 100. As an example, the processing unit 10 may be provided at a topside installation, such as onboard a floating vessel or an offshore platform, or at an onshore site, and readings of the differential pressure sensor 20 may be provided to the processing unit 10 via a data connection, e.g. via an umbilical or a subsea cable or the like. In such configuration, the subsea part of the flow meter 100 may be made less complex, and the processing unit 10 is easier accessible, e.g. for servicing, for reconfiguration or the like.

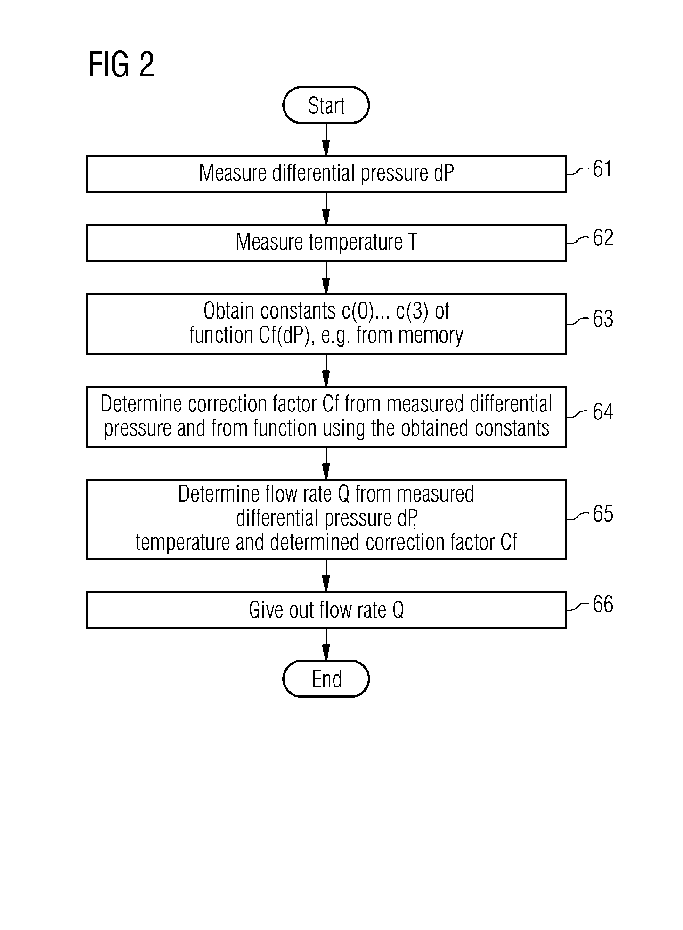

Figure 2 illustrates a method according to an embodiment of the invention, which may for example be performed by means of the flow meter 100 of figure 1. Accordingly, the flow meter 100 may be configured to perform the method illustrated in figure 2. In a first step 61, differential pressure dP is measured, e.g. by means of the differential pressure sensor 20. In a step 62, the temperature T is measured, e.g. by means of temperature sensor 30. Based on the measure differential pressure, the correction factor Cf is then determined. For this purpose, the constants c(0) to c(3) of a function Cf(dP) which relates the correction factor to differential pressure are retrieved from the data memory 11 (step 63). These constants are constant of a third order polynomial function. In other embodiments, different functions or a different order polynomial may be used.

By applying the function, which is determined by the retrieved constants, to the measured differential pressure, the correction factor Cf is determined in step 64. In step 65, the flow rate Q of the medium through the section of pipe 50 is then determined from the measured differential pressure dP, the temperature and the determined correction factor Cf. Steps 64 and 65 may for example be performed by the microprocessor 12 of processing unit 10. In step 66, the flow rate Q is given out, e.g. via the data interface 13. The flow rate Q may for example be communicated to a topside installation by means of the data line 16.

As mentioned above, the correction factor may be determined for the particular configuration of the flow meter. This may for example be achieved by determining the function, which is stored in the data memory 11, by means of calibration measurements performed by the flow meter 100. The flow meter 100 may in some embodiments comprise the section of pipe 50 and the flow restriction 51, and accordingly, the correction factor may also be specific to this particular configuration of the pipe section 50 and the flow restriction 51. By means of such determination of the function, high accuracy determination of the flow rate of the medium becomes possible.

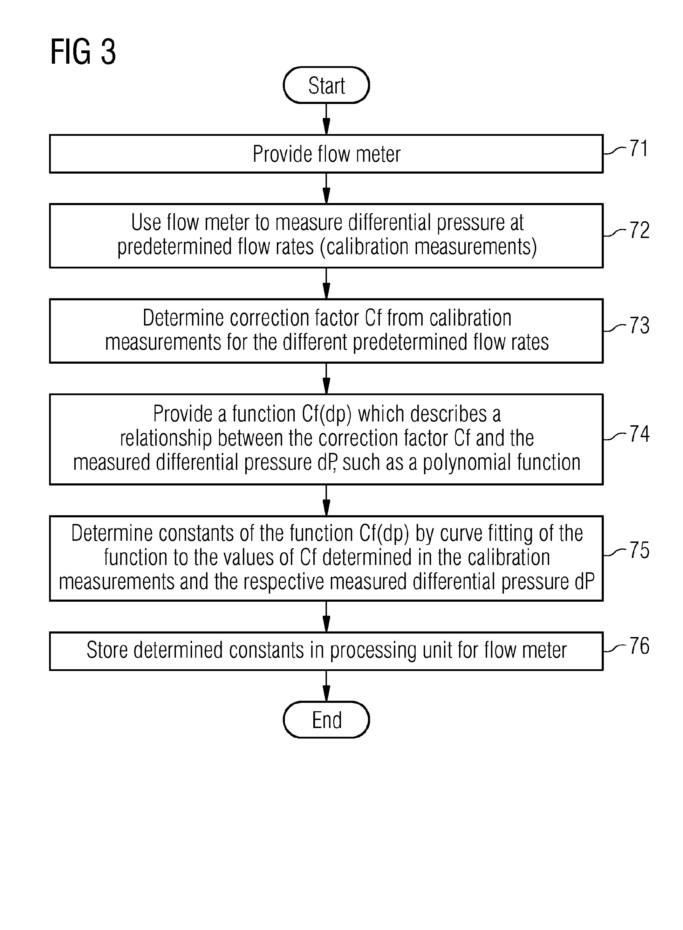

The configuration of the flow meter 100, in particular the determination of the function stored in data memory 11 for deriving the correction factor, is described hereinafter with respect to figure 3. In a step 71, the flow meter is provided. In step 72, the flow meter 100 is used to measure differential pressure at predetermined flow rates. For these calibration measurements, the flow meter may for example be mounted in a water calibration loop, with a reference flow calculator. As an example, measurement may be taken at at least 5, preferably at least 7 different predetermined flow rates.

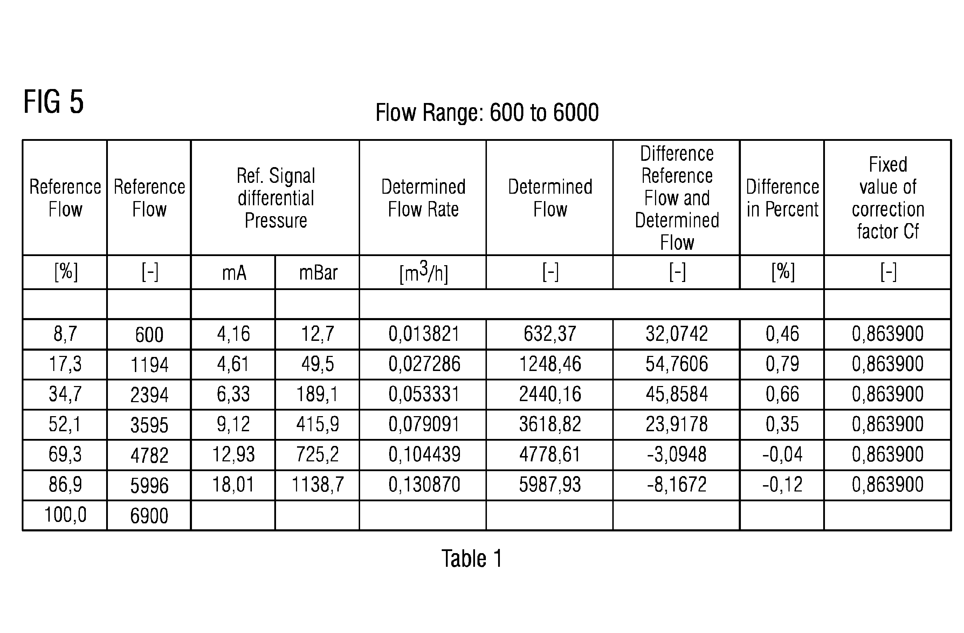

Figure 5, Table 1 illustrates the results of such water loop test when using a constant correction factor Cf. As can be seen, the flow is varied from 8.7 % to 100 % (maximum flow). The differential pressure is measured as a signal from the differential pressure sensor 20 given in milliamperes (mA), corresponding to a particular differential pressure across the flow restriction given in millibar (mBar). The table further shows the calculated flow and the difference between the calculated flow and the actual reference flow. As can be seen, the correction factor Cf used in flow rate determination is kept constant. This results in errors in the calculated flow rate which exceed 0.5 %.

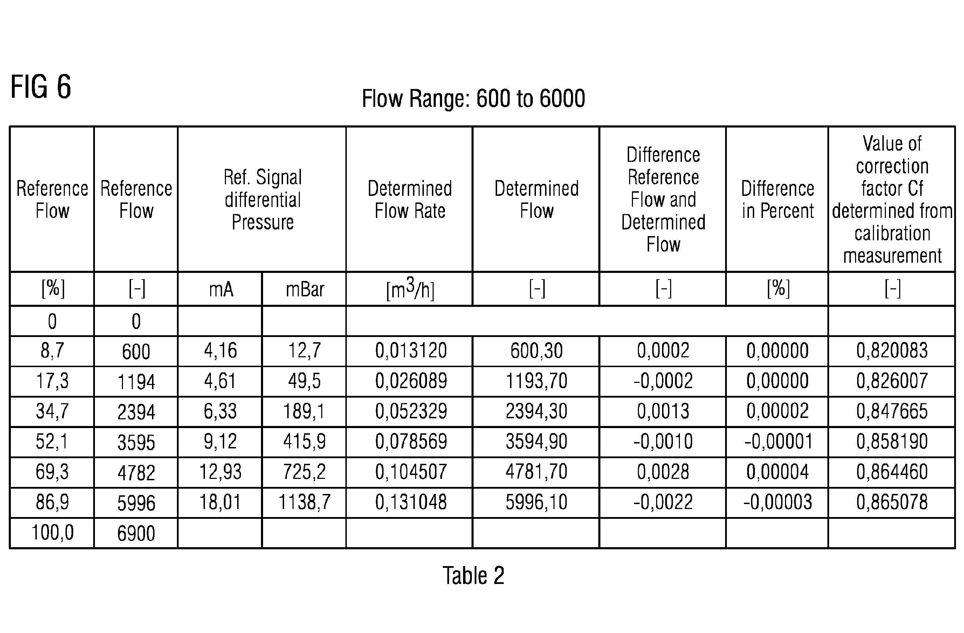

Using the calibration measurements, a correction factor Cf is determined for the different predetermined flow rates in step 73. This means that the Cf value is adjusted for each calibration measurement such that the calculated flow rate is substantially the same as the predetermined flow rate at which the calibration measurement was performed. This is illustrated in table 2 of figure 6.

As can be seen from figure 6, table 2, the correction factor Cf is now different for each calibration measurement. Furthermore, the difference between the predetermined flow rate of the calibration measurement and the calculated flow rate is, naturally, close to zero. Consequently, by using the so determined correction factors, the determination of the flow rate with high accuracy becomes possible.

In order to allow these correctional factors to be used over the entire range of differential pressure measurements a function is used to describe the correction factor Cf. A function that may be used for this purpose may for example be the following third order polynomial:

$$Cf = c(0) + c(1)*dP + c(2)*dP^2 + c(3)* dP^3$$

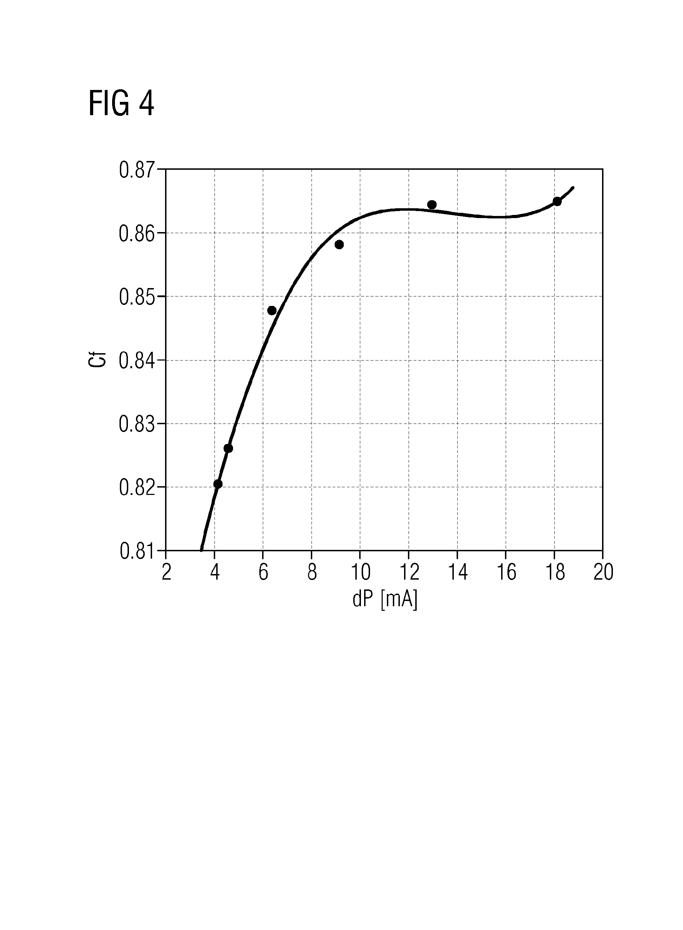

This function is provided in step 74. c(0) to c(3) are the constants of the polynomial. dP is the reading of the differential pressure in millibar or milliampere, depending on the application and the unit that is to be used during the actual measurement. Now using the reading of differential pressure in milliampere and the determined correction of factors Cf as given in table 2, the polynomial of the above equation can be fitted to the respective value pairs in order to determine the constants c(0), c(1), c(2) and c(3) of the polynomial. This is illustrated in figure 4. Figure 4 shows on the X-axis the reading of differential pressure in milliampere, and on the Y-axis the correction factor Cf as determined in table 2. The calibration measurements of table 2 are shown in figure 4 as dots. The solid line illustrates the fitted polynomial function. The curve fit results in the following constants of the polynomial function:

$$c(0) = 7,277579E-01$$

$$c(1) = 3,090639E-02$$

$$c(2) = -2,308702E-03$$

$$c(3) = 5,649634E-05$$

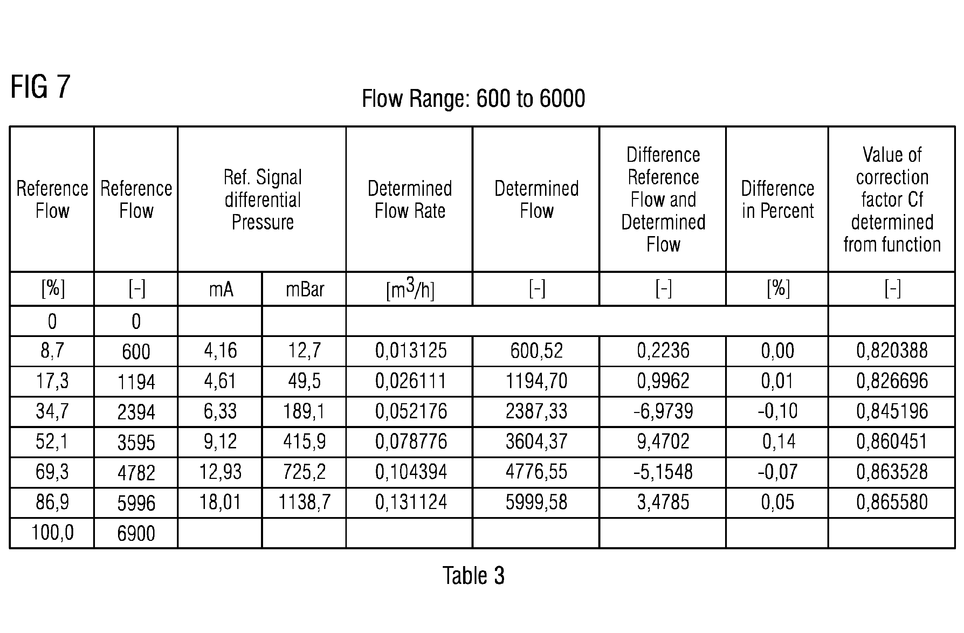

Accordingly, by curve fitting the provided function Cf(dP) to the values of Cf determined in the calibration measurements and the respective differential pressure readings dP, as given in table 2, the constants of the polynomial can be determined (step 75). These constants are now stored in the processing unit 10 of flow meter 100 (step 76), in particular in the data memory 11 of the processing unit 10. The constants are now available for retrieval when performing flow rate measurements by means of flow meter 100. Accordingly, since the constants were determined by making use of the flow meter 100, and potentially also of the particular section of pipe 50 and flow restriction 51, these constants are very specific to the flow meter 100 and can thus lead to a flow rate determination with high accuracy. This is illustrated in table 3 of figure 7.

In table 3, the method of figure 2 is applied to the measurements of table 1, i.e. the correction factor which is used for calculating the flow rate is determined from the fitted curve described by the constants stored in memory 11. Since the correction factor Cf in table 3 is determined from the function, values of Cf for the same differential pressure are slightly different from the values Cf in table 2. Yet, as can be seen, the calculated flow rate is almost identical to the actual flow rate that was applied in the measurements. Consequently, the error in the determined flow rate is at maximum 0.14 %. This is a significant improvement over the determination of the flow rate with constant correction factor as illustrated in table 1. Since the function is used for determining Cf, Cf can be determined for any differential pressure and thus any flow rate up to 100% flow.

The flow rate determination itself may be performed according to the following equation:

$$Q = \frac{\pi}{4} \sqrt{\frac{2}{\rho}} \frac{D(m)^2 \beta^2}{\sqrt{1 - \beta^4}} \sqrt{dP} * Cf * Y$$

In the equation, the variables at parameters have the following meaning:

| Symbol | Value | [Unit] | Comments |
|---|---|---|---|
| $\pi$ | 3.141593 | [-] | Pi |
| $\rho$ | 1037 | [kg/m³] | density |
| $\beta$ | 0.85 | [-] | Diameter ratio (of flow restriction) |
| D(m) | 0.1116 | [kg/m³] | Upstream diameter |
| Cf | * | [m] | Correction factor determined from function (also termed discharge coefficient) |
| Y | 1 | [-] | Gas Conversion (expansibil-ity factor, accounts for the compressibility of gases, =1 for liquids) |

(continued)

| Symbol | Value | [Unit] | Comments |
|--------|-------|--------|----------|
| dP | Differential Pressure Reading*100 | [Pa] | Reading = Digital dP output [mBar] |
| dP | ((dP Reading-4)*dP FS*100)/16 | [Pa] | Reading = Analogue 4-20 mA output |
| Flow FS | 6000 | [Flow Unit] | Full Scale Flow, Selected for the flow used in this document |
| dP FS | 1300 | [mBar] | Full Scale dP-sensor. Selected for the flow used in this document |

Note that apart from giving the flow rate in $m^3/s$, the flow rate may be given in any other units, as required by the particular application. In order to enable a fast and efficient flow rate determination by means of processing unit 10, the constants of the polynomial function, as well as the parameters of table 4 above may be stored in a data structure within memory 11, they may for example be stored in a configuration file that is specific to the particular flow meter 100. As an example, the constants of the third order polynomial, $c(0)$, $c(1)$, $c(2)$ and $c(4)$ may be stored in the data structure, as well as the parameters n, p, $\beta$, D(m), and Y. For the above described flow meter for which the calibration measurements as shown in table 1 were performed, such data structure may for example store the following values:

$$\pi = 3.141593$$

$$\rho = 1037$$

$$\beta = 0.85$$

$$D(m) = 0.1116$$

$$Y = 1$$

$$c(0) = 7.2775979E-01$$

$$c(1) = 3.0900639E-02$$

$$c(2) = -2.309702E-03$$

$$c(3) = 5.6649634E-05$$

As can be seen from the above description, embodiments of the invention provide the measurement of flow rate by means of flow meter 100 with improved accuracy. In particular, the accuracy of flow rate measurements can be improved over the whole operating range of flow meter 100. It should be clear that the flow meter 100 may be used with other types of flow restrictions, it may be applied in any flow rate measurement which makes use of differential pressure measurements.

In this or in any divisional application, claims may also be aimed at a flow meter which comprises a processing unit disposed in a subsea enclosure, the possessing unit being configured to determine flow rate from measured differential pressure. Such flow meter can comprise a data interface via which the determined flow rate can be communicated, e.g. to a topside installation, as outlined further above. In some embodiments, such flow meter may not make use of the above described correction factor determined on the basis of measure differential pressure, but may use any other method for determining flow rate, e.g. a constant correction factor. Such flow meter has the advantage that readings of flow rate can be directly taken from the flow meter, in particular the subsea flow meter, so that further processing of the values measured by such flow meter is not necessary. This facilitates the use of such type of flow meter within a subsea installation, or the use of the measured flow rates at a topside installation, since the operator would not need to derive the flow rate himself from e.g. measured differential pressure. In embodiments of such flow meter, the flow meter, the processing unit and the data interface may be configured in accordance with any of the above described embodiments.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.


**Claims**

1.   A method of determining a flow rate of a medium flowing through a section of pipe (50) by means of a flow meter (100), comprising the steps of

- measuring at least differential pressure across a flow restriction (51) in the section of pipe (50) by means of the flow meter (100),
- determining a correction factor (Cf), the correction factor being determined in dependence on the measured differential pressure (dP) and the configuration of the flow meter (100), and
- determining the flow rate of the medium on the basis of the measured differential pressure (dP) and the determined correction factor (Cf).

2.   The method according to claim 1, wherein determining the correction factor comprises providing for the particular flow meter (100) a function which relates the correction factor (Cf) to differential pressure (dP) and applying the function to the measured differential pressure to determine the correction factor.

3.   The method according to claim 2, wherein the function is a polynomial and wherein providing the function comprises providing constants $(c(0)...c(3))$ of the polynomial.

4.   The method according to claim 3, wherein the polynomial is a polynomial of at least third order.

5.   The method according to any of claims 2-4, wherein the function is a function determined from plural flow rate calibration measurements using said flow meter (100).

6.   The method according to claim 5, wherein the function is a function that is obtained by curve fitting a template function, in particular a polynomial function, to the plural flow rate calibration measurements.

7.   The method according to claim 5 or 6, wherein a flow rate calibration measurement is performed by measuring differential pressure (dP) for different predetermined flow rates and determining a correction factor (Cf) for each pair of predetermined flow rate and measured differential pressure, and wherein determining said function comprises providing the resulting pairs of determined correction factors and measured differential pressure for the determination of said function, in particular by curve fitting.

8.   A flow meter for measuring a flow rate of a medium flowing through a section of pipe, comprising:

- a differential pressure sensor (20) configured to measure differential pressure across a flow restriction (51) in the section of pipe (50),
- a processing unit (10) adapted to determine a correction factor (Cf) in dependence on the measured differential pressure (dP) and the configuration of the flow meter (100), the processing unit (10) being further adapted to determine the flow rate of the medium through the section of pipe (50) on the basis of the measured differential pressure (dP) and the determined correction factor (Cf).

9.   The flow meter according to claim 8, comprising said section of pipe (50) and said flow restriction (51).

10. The flow meter according to claim 8 or 9, wherein the processing unit (10) comprises a data interface (13), the processing unit being configured to provide a data signal indicative of said determined flow rate at said data interface (13).

11. The flow meter according to any of claims 8 to 10, wherein the flow meter is a subsea flow meter comprising a housing (40) mounteable to said section of pipe (50), wherein the processing unit (10) is arranged within said housing (40).

12. The flow meter according to claim 11, wherein the flow meter (100) further comprises a connector (15) disposed on said housing (40) and a data connection (14) between said processing unit (10) and said connector (15).

13. The flow meter according to claim 11 or 12, wherein the housing (40) is adapted to enable an operation of the flow meter (100) at a water depth of at least 100m, preferably at least 500m or 1000m.

14. The flow meter according to any of claims 8-13, wherein said processing unit (10) comprises a data memory (11), said data memory (11) storing configuration data for the flow meter (100) comprising at least constants $(c(0)...c(3))$ of a function relating the correction factor (Cf) to measured differential pressure (dP), said constants being specifically determined for said flow meter (100).

15. A method of configuring a flow meter (100) according to any of claims 8-14 for determining a correction factor from a measured differential pressure, comprising:

- measuring differential pressure (dP) for plural predetermined flow rates by the flow meter (100) in a calibration measurement,
- determining a correction factor (Cf) for each of the measured differential pressures by using the respective measured differential pressure and the predetermined flow rate, and
- determining a function which describes a relationship between the determined correction factors (Cf) and the respective measured differential pressures (dP), wherein the function is determined by adjusting constants $(c(0)...c(3))$ of the function such that the function approximates said relationship, and
- providing the constants $(c(0)...c(3))$ of the function to a processing unit (10) of the flow meter (100) for the determination of a correction factor from measured differential pressure by the flow meter.

FIG 1

# FIG 2

Start

Measure differential pressure dP — 61

Measure temperature T — 62

Obtain constants c(0)... c(3) of
function Cf(dP), e.g. from memory — 63

Determine correction factor Cf from measured differential
pressure and from function using the obtained constants — 64

Determine flow rate Q from measured
differential pressure dP,
temperature and determined correction factor Cf — 65

Give out flow rate Q — 66

End

# FIG 3

Start

Provide flow meter — 71

Use flow meter to measure differential pressure at predetermined flow rates (calibration measurements) — 72

Determine correction factor Cf from calibration measurements for the different predetermined flow rates — 73

Provide a function Cf(dp) which describes a relationship between the correction factor Cf and the measured differential pressure dP, such as a polynomial function — 74

Determine constants of the function Cf(dp) by curve fitting of the function to the values of Cf determined in the calibration measurements and the respective measured differential pressure dP — 75

Store determined constants in processing unit for flow meter — 76

End

## FIG 4

# FIG 5

Flow Range: 600 to 6000

| Reference Flow | Reference Flow | Ref. Signal differential Pressure | | Determined Flow Rate | Determined Flow | Difference Reference Flow and Determined Flow | Difference in Percent | Fixed value of correction factor Cf |
|---|---|---|---|---|---|---|---|---|
| [%] | [-] | mA | mBar | [m$^3$/h] | [-] | [-] | [%] | [-] |
| | | | | | | | | |
| 8,7 | 600 | 4,16 | 12,7 | 0,013821 | 632,37 | 32,0742 | 0,46 | 0,863900 |
| 17,3 | 1194 | 4,61 | 49,5 | 0,027286 | 1248,46 | 54,7606 | 0,79 | 0,863900 |
| 34,7 | 2394 | 6,33 | 189,1 | 0,053331 | 2440,16 | 45,8584 | 0,66 | 0,863900 |
| 52,1 | 3595 | 9,12 | 415,9 | 0,079091 | 3618,82 | 23,9178 | 0,35 | 0,863900 |
| 69,3 | 4782 | 12,93 | 725,2 | 0,104439 | 4778,61 | -3,0948 | -0,04 | 0,863900 |
| 86,9 | 5996 | 18,01 | 1138,7 | 0,130870 | 5987,93 | -8,1672 | -0,12 | 0,863900 |
| 100,0 | 6900 | | | | | | | |

Table 1

# FIG 6

Flow Range: 600 to 6000

EP 2 848 900 A1

| Reference Flow | Reference Flow | Ref. Signal differential Pressure | | Determined Flow Rate | Determined Flow | Difference Reference Flow and Determined Flow | Difference in Percent | Value of correction factor Cf determined from calibration measurement |
|---|---|---|---|---|---|---|---|---|
| [%] | [-] | mA | mBar | [m$^3$/h] | [-] | [-] | [%] | [-] |
| 0 | 0 | | | | | | | |
| 8,7 | 600 | 4,16 | 12,7 | 0,013120 | 600,30 | 0,0002 | 0,00000 | 0,820083 |
| 17,3 | 1194 | 4,61 | 49,5 | 0,026089 | 1193,70 | -0,0002 | 0,00000 | 0,826007 |
| 34,7 | 2394 | 6,33 | 189,1 | 0,052329 | 2394,30 | 0,0013 | 0,00002 | 0,847665 |
| 52,1 | 3595 | 9,12 | 415,9 | 0,078569 | 3594,90 | -0,0010 | -0,00001 | 0,858190 |
| 69,3 | 4782 | 12,93 | 725,2 | 0,104507 | 4781,70 | 0,0028 | 0,00004 | 0,864460 |
| 86,9 | 5996 | 18,01 | 1138,7 | 0,131048 | 5996,10 | -0,0022 | -0,00003 | 0,865078 |
| 100,0 | 6900 | | | | | | | |

Table 2

# FIG 7

Flow Range: 600 to 6000

| Reference Flow | Reference Flow | Ref. Signal differential Pressure | | Determined Flow Rate | Determined Flow | Difference Reference Flow and Determined Flow | Difference in Percent | Value of correction factor Cf determined from function |
|---|---|---|---|---|---|---|---|---|
| [%] | [-] | mA | mBar | [m$^3$/h] | [-] | [-] | [%] | [-] |
| 0 | 0 | | | | | | | |
| 8,7 | 600 | 4,16 | 12,7 | 0,013125 | 600,52 | 0,2236 | 0,00 | 0,820388 |
| 17,3 | 1194 | 4,61 | 49,5 | 0,026111 | 1194,70 | 0,9962 | 0,01 | 0,826696 |
| 34,7 | 2394 | 6,33 | 189,1 | 0,052176 | 2387,33 | -6,9739 | -0,10 | 0,845196 |
| 52,1 | 3595 | 9,12 | 415,9 | 0,078776 | 3604,37 | 9,4702 | 0,14 | 0,860451 |
| 69,3 | 4782 | 12,93 | 725,2 | 0,104394 | 4776,55 | -5,1548 | -0,07 | 0,863528 |
| 86,9 | 5996 | 18,01 | 1138,7 | 0,131124 | 5999,58 | 3,4785 | 0,05 | 0,865580 |
| 100,0 | 6900 | | | | | | | |

Table 3

EP 2 848 900 A1

Europäisches
Patentamt
European
Patent Office
Office européen
des brevets

## EUROPEAN SEARCH REPORT

Application Number

EP 13 18 4603

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/004674 A2 (RIVATEK INC [US]; KIELB JOHN ALLAN [US]; EDWARDS GRANT BRADLEY [US]; S) 12 January 2006 (2006-01-12) * the whole document * | 1-10,14, 15 | INV. G01F1/50 |
| X | US 2005/258959 A1 (SCHNAARE THEODORE H [US] ET AL SCHNAARE THEODORE [US] ET AL) 24 November 2005 (2005-11-24) * the whole document * | 1-10,14, 15 | |
| X | WO 2011/020017 A2 (BAKER HUGHES INC [US]; ONG JOO TIM [US]) 17 February 2011 (2011-02-17) * the whole document * | 1-4, 8-13,15 | |

TECHNICAL FIELDS
SEARCHED (IPC)

G01F

The present search report has been drawn up for all claims

| Place of search | Date of completion of the search | Examiner |
|---|---|---|
| Munich | 11 February 2014 | Roetsch, Patrice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 18 4603

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2014

| Patent document cited in search report | | | Publication date | Patent family member(s) | | | Publication date |
|---|---|---|---|---|---|---|---|
| WO 2006004674 | A2 | | 12-01-2006 | US | 2006288799 | A1 | 28-12-2006 |
| | | | | WO | 2006004674 | A2 | 12-01-2006 |
| US 2005258959 | A1 | | 24-11-2005 | CN | 1957306 | A | 02-05-2007 |
| | | | | EP | 1751502 | A2 | 14-02-2007 |
| | | | | JP | 2007538254 | A | 27-12-2007 |
| | | | | RU | 2355010 | C2 | 10-05-2009 |
| | | | | US | 2005258959 | A1 | 24-11-2005 |
| | | | | WO | 2005116589 | A2 | 08-12-2005 |
| WO 2011020017 | A2 | | 17-02-2011 | AU | 2010282333 | A1 | 23-02-2012 |
| | | | | GB | 2485313 | A | 09-05-2012 |
| | | | | RU | 2012109105 | A | 20-09-2013 |
| | | | | US | 2011040485 | A1 | 17-02-2011 |
| | | | | WO | 2011020017 | A2 | 17-02-2011 |

EPO FORM P0459

For more details about this annex : see Official Journal of the European Patent Office, No. 12/82